# EUROPEAN PATENT SPECIFICATION

(11) **EP 2 978 635 B1**
(45) Date of publication and mention of the grant of the patent: **06.05.2020**
(21) Application number: 14773630.0
(22) Date of filing: 26.03.2014
(51) Int. Cl.: B60P 7/08, B25B 25/00, A44B 11/12

(54) **DEVICE FOR FASTENING A LOAD STRAP**
VORRICHTUNG ZUR BEFESTIGUNG EINES TRANSPORTBANDES
DISPOSITIF PERMETTANT D'ATTACHER UNE SANGLE D'ARRIMAGE DE CHARGE

(30) Priority: 27.03.2013 FI 20135297
(43) Date of publication of application: 03.02.2016
(73) Proprietor: Takkinen, Esa, 51980 Lauteala (FI)
(72) Inventor: Takkinen, Esa, 51980 Lauteala (FI)
(74) Representative: Berggren Oy, Helsinki & Oulu
(86) International application number: PCT/FI2014/050217
(87) International publication number: WO 2014/154947

(56) References cited:
- DE-A1-102009 023 937
- GB-A- 163 581
- JP-A- H10 229 905
- JP-A- H10 229 905
- US-A- 686 982
- US-A- 686 982

## Description

### Technical field

The application relates generally to devices for fastening a load strap, such as disclosed in US 686 982 A.

### Background

The fastening of a load carried on the trailer, platform or top of a vehicle is conducted with load straps, which are secured around the load with a ratchet type tensioner included in the strap.

Threading a strap into a ratchet buckle and pulling the same through a crosswise center spindle of the ratchet lengthwise of the buckle is a highly inconvenient and tedious operation, because threading the strap end into the buckle and into a tight slot in the center spindle, tensioning the strap, as well as releasing tension of the strap require a great deal of finger dexterity. In addition, in cold winter weather and in rainy conditions, the insertion and release of a strap is problematic due to the stiffness and sharp edges of metal ratchet parts, the skin of a user's hands being easily torn at the edges. If the user protects his/her hands with gloves, threading and releasing the strap into and out of the buckle becomes nearly impossible.

Likewise, the operation of a ratchet becomes awkward and ultimately impossible as a result of malfunctions as the strap end is frayed in use, thus making its threading and tensioning more difficult. In addition, the use of a ratchet is hindered and its operating reliability suffers as dirt, such as sand and mud, is allowed in ratchet mechanisms during handling or transport.

Publication SE 527309 C2 discloses a ratchet intended for tightening a strap, wherein the strap is fed into the ratchet with a strap edge first through an opening in an arm of the buckle. The side feed ratchet facilitates threading of the strap, but the ratchet continues to be vulnerable to problems caused by cold weather and rainy conditions, fraying of the strap, and dirt.

### Summary

It is one objective of the invention to eliminate some of the above-stated problems found in the currently available devices intended for fastening load straps. Another objective is to provide a fastening device attractive in terms of its manufacturing costs.

The one objective of the invention is attained with a device of claim 1 and a system of claim 7.

The device according to one embodiment for fastening a load strap comprises a buckle frame, which is adapted to receive the strap by way of a side slot present in an arm of the buckle frame. The buckle frame includes a slot latch which is adapted to close the side slot, and a locking latch which is spring-loaded and adapted to secure the strap jointly with the slot latch as the locking latch is pushed by a spring of the locking latch against a fastening surface of the buckle frame in such a way that the strap is retained between the locking latch and the fastening surface.

The system according to one embodiment comprises at least one load strap and a device for fastening the load strap. The device has a buckle frame, which is adapted to receive the strap by way of a side slot present in an arm of the buckle frame. The buckle frame includes a slot latch which is adapted to close the side slot, and a locking latch which is spring-loaded and adapted to secure the strap jointly with the slot latch as the locking latch is pushed by a spring of the locking latch against a fastening surface of the buckle frame.

Other embodiments are presented in the dependent claims.

### Brief description of the figures

The detailed description of the figures explains exemplary embodiments of the invention more precisely with reference to the accompanying figures, in which
- figs. 1a-1c: show a device intended for fastening a load strap and provided with a separate slot latch, and
- figs. 2a-2d: show a device intended for fastening a strap and provided with a slot latch in connection with a locking latch.

### Detailed description of the figures

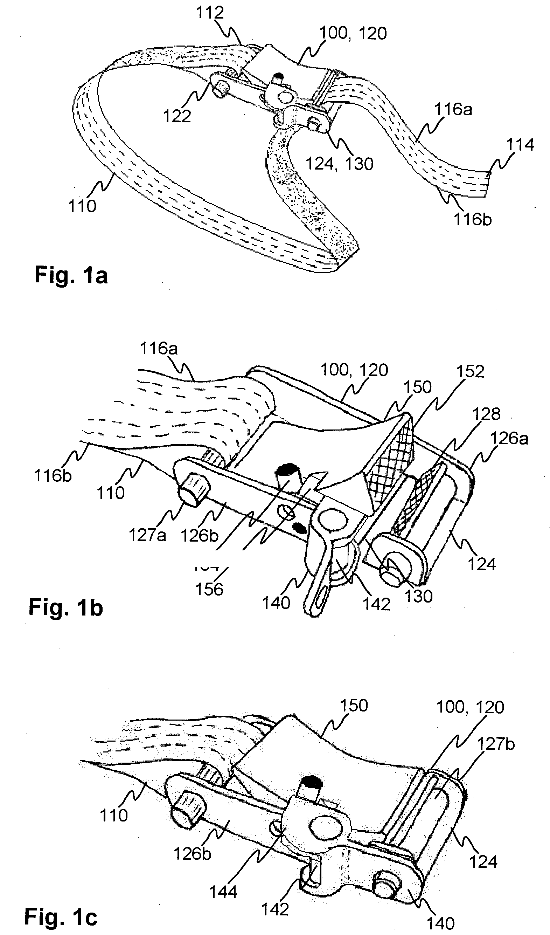

Fig. 1a shows a device 100, which is intended for fastening a load strap 110 and tensioning the same around a load for securing the load (not shown) placed for example on a car-drawn trailer, and which can be made for example from stainless steel or aluminum.

The strap 110, a first end 112 of which is fixed to a first end 122 of an elongated buckle frame 120 of the device 100, is placed around the load, and a second end 114 of the strap 110 is inserted into the device 100 by way of a side slot 130 present in the proximity of a second end 124 of its buckle frame 120. The strap 110, which has side edges 116a, 116b, is thereafter possible to tension around the load. The tightened strap 110 can be slackened from around the load and withdrawn from the device 100 by way of the same slot 130.

The device 100 expedites using the strap 110 and securing the load to a means of transport, and it also enables the practice of traditional threading technique in case the slot 130 passes unnoticed by a user. In addition, a single strap 110 can be placed even in several devices 100, whereby the means of transport, for example a trailer, allows an arrangement of the strap 110 several times from side to side across the means of transport.

Alternatively, the strap 110 can be for example a two-piece webbing, whereby the device 100 has one end 112 fitted with an engagement hook enabling the hitching of a trailer, or with a first segment of the strap 110 which further comprises an engagement hook. In this case, the strap 110 has a first end of its second segment also provided with an engagement hook, and a second end is in turn adapted, as shown in fig. 1a, to be inserted inside the device 100 by way of the slot 130 in its buckle frame 120 for the purpose of securing the load.

Figs. 1b-1c show in more detail a first embodiment of the device 100, i.e. a lock or a tensioner functioning in a so-called eccentric locking mode, comprising the buckle frame 120 which is adapted to receive the strap 110 by way of the side slot 130 in an arm 126b of the frame 120, the strap 110 being insertable therein with its edge 116a, 116b first.

The frame 120 includes a transverse attachment spindle 127a, which extends in a direction substantially normal to the arms 126a, 126b and to which it is possible to attach one end 112 of the strap 110, just an engagement hook, or a separate strap segment provided with an engagement hook.

The frame 120 is provided with a slot latch 140, which is adapted to prevent an exit of the strap 110 from inside the frame 120 when the latch 140 is closed as in fig. 1c. The latch 140 is adapted to operate by rotating, in the process of being opened and closed, relative to an axle 142 which extends in a direction substantially perpendicular to an upper part of the frame120 - or in a direction substantially normal to a top surface of the frame 120. In addition, one end 144 of the latch 140 operates as a detent member, the function of which is to ensure that the strap 110 can be effortlessly threaded into and withdrawn from the device 100.

The frame 120 further includes a locking latch 150, which is spring-loaded and adapted to fasten the strap 110 as the latch 150 is pushed by at least one loaded spring (not shown) thereof against a fastening surface 128 of the frame 120 in such a way that the strap 110 is retained between the latch 150 and the surface 128 as the latch 140 is closed by rotating relative to the axle 142. The surface 128 is fixed to a transverse attachment spindle 127b, which is substantially normal to the arms 126a, 126b, or to some other suchlike attachment element.

Said system comprises at least one load strap 110 and a device 100 for fastening the same. In the device 100, the latch 140 is adapted to move, in the process of being opened and closed, relative to the axle 142 which is perpendicular to an upper part of the frame 120.

The latch 150 is provided with a detent rod 154, which is adapted to prevent opening of the latch 140 so as to enable the strap 110 to be inserted by way of the slot 130 into the device 100 or the strap 110 to be withdrawn when the latch 150 is in a closed position. In addition, the latch 150 is provided with a recess 156.

In a system according to one embodiment, as set forth in any of the preceding embodiments, said system comprises at least one load strap 110 and a device 100 for fastening the same. In the device 100, the latch 150 is provided with a detent rod 154, which is adapted to prevent opening of the latch 140 so as to enable the strap 110 to be inserted by way of the slot 130 into the device 100 or the strap 110 to be withdrawn when the latch 150 is in a closed position.

The latches 140, 150 operate in unison. When the locking is released, the latch 150 is first pressed open to a top position, as shown in fig.1b, whereby the latch 140 can be opened as the detent rod 154 moves aside from the path of the latch 140, enabling the latch 140 to be opened by rotation relative to the axle 142. In the process of opening the latch 140, its end 144 pivots into the recess 156, as shown in fig. 1b, whereby the end 144 secures the latch 150 in the top position and the strap 110 can be threaded into the device 100, slackened, tensioned and removed from the device 100 effortlessly by way of the slot 130. The latch 150 does not take up a locking position against the surface 128 or the strap 110 therebetween unless the latch 140 is in a closed position. When the latch 140 is pivoted to a closed position, its end 144 emerges from the recess 156 so as to enable the latch 150 to be lowered to its bottom position - locking position - against the surface 128 or the strap 110 therebetween.

With the latch 140 in a closed position, the strap 110 can be tensioned or relaxed as desired by means of the latch 150 with a possibility of lowering the latch 150 against the strap 110 to a tension receiving position or raising the same to the top position.

The frame 120 is further provided with a transverse latch spindle (not shown) extending in a direction normal to the arms 126a, 126b, relative to which the latch 150 is adapted to operate. The latch 150 further comprises a fastening surface 152, which is adapted to engage against the strap 110 as the latch 150 presses against the surface 128 of the frame 120. At least one of the surfaces 128, 152, or both as indicated in fig. 1b, is roughened for a secure adherence to the strap 110 holding it in place with the latch 150 locked as shown in fig. 1c.

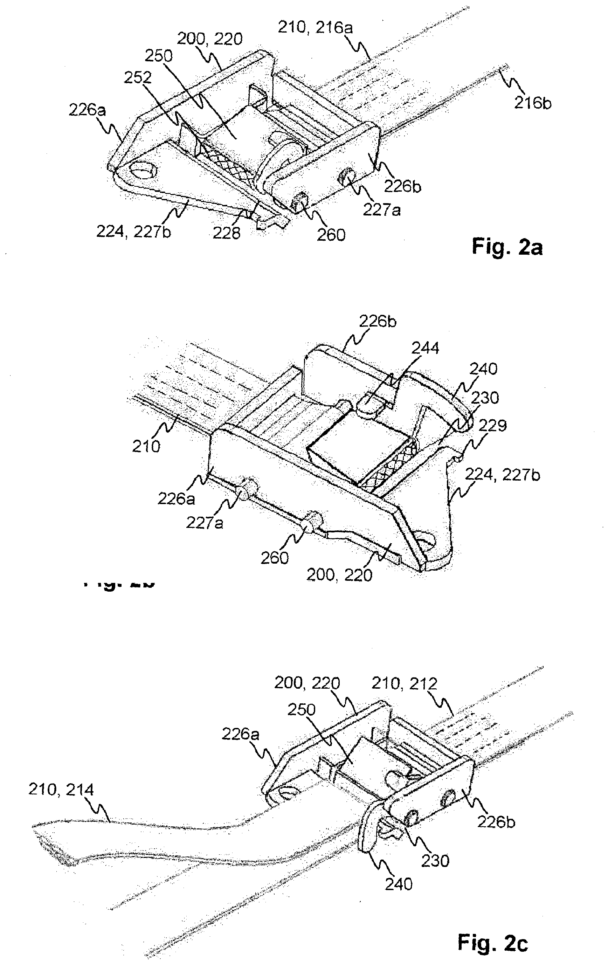

Figs. 2a-2d show in more detail a second embodiment for a device 200 constructed for example in stainless steel or aluminum, having its buckle frame 220 adapted to receive a fastening strap 210 for example with its side edge 216a, 216b first by way of a side slot 230 present in an arm 226b and clearly visible in figs. 2b-2c.

The frame 220, in a design similar to figs. 1b-1c, is provided with a transverse attachment spindle 227a, which extends in a direction substantially normal to arms 226a, 226b and to which it is possible to attach for example one end 212 of the strap 210, and with a transverse latch spindle 260, which extends in a direction substantially normal to the arms 226a, 226b and relative to which a locking latch 250 operates by rotation.

In a system according to one embodiment, as set forth in any of the preceding embodiments, said system comprises at least one load strap 110, 210 and a device 100, 200 for fastening the same. The device 100, 200 has its buckle frame 120, 220 provided with a transverse attachment spindle 127a, 227a, to which it is possible to attach one end 112, 212 of the strap 110, 210 or a separate load strap segment provided with an engagement hook.

A slot latch 240 prevents a withdrawal of the strap 210 when the latch 240 is in a closed position as shown in figs. 2c-2d. The latch 240 further includes a latch member 244, the pressing of which, for example with a thumb towards a first end 222 of the frame 220, enables the latch 240 to operate by rotation relative to a spindle 260 jointly with the latch 250 so as to enable the strap 210 to be inserted by way of the slot 230 into or to be removed from the device 200 with the latches 240, 250 in open positions as shown in figs. 2a-2b. Fig. 2b further shows a detent member 229 at one end 224 of the frame 220, the purpose of which is to prevent a movement of the currently closed latch 240 in lateral direction in order for the locking of the strap 210 not to slacken and/or for the latch 240 not to break - snap - as a result of the lateral motion. The strap 210 need not be threaded through the device 200, but can be placed by way of the arm 226b directly into the device 200 at a desired location. A placement of the strap 210 is always successful, nor is it hampered for example by weather conditions, gloves, dirt, or a frayed webbing of the strap. The device 200 is durable, because the construction of the latch 240 makes it highly reliable in operation and highly resistant to mechanical stress.

In a system according to one embodiment, as set forth in any of the preceding embodiments, said system comprises at least one load strap 210 and a device 200 for fastening the same. In the device 200, the latch 240 is adapted to operate relative to the spindle 260 jointly with the latch 250 so as to enable the strap 210 to be inserted by way of the slot 230 into or to be removed from the device 200 with the latch 250 in an open position, and the latch 240 prevents the strap 210 from being inserted by way of the slot 230 into or being removed from the device 200 with the latch 250 in a closed position.

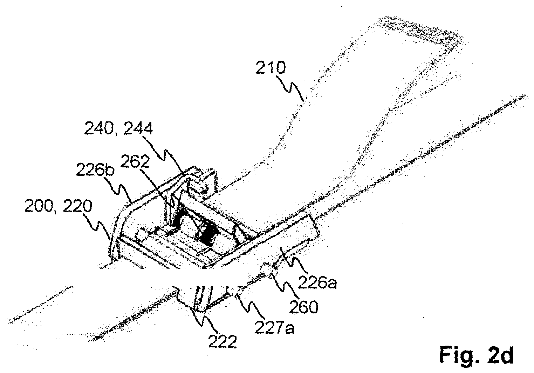

The latch 250 is also spring-loaded and adapted to secure the strap 210 as it is pushed by a spring 262 of the latch 250 against a fastening surface 228 of the frame 220, such that the strap 210 is retained between the latch 250 and the surface 228. The number of springs 262 in both embodiments of the device 100, 200 is at least one, but the pushing elements may also have been implemented for example with two or three springs 262 as depicted in fig. 2d. The surface 228 is fixed to or included in an attachment member 227b at one end 224 of the frame 220, as shown in figs. 2a-2d, or it is fixed to a transverse attachment spindle or the like extending in a direction substantially normal to the arms 226a, 226b.

The latch 250 can also include a fastening surface 252 clearly visible in fig. 2a, which engages against the strap 210 as the latch 250 presses against the surface 228 of the frame 220. Either one or each of the surfaces 228, 252 can be roughened.

In a system according to one embodiment, as set forth in any of the preceding embodiments, said system comprises at least one load strap 110, 210 and a device 100, 200 for fastening the same. The device 100, 200 has its frame 120, 220 further provided with a transverse spindle 260, relative to which the latch 150, 250 is adapted to operate. The latch 150, 250 comprises a surface 152, 252, which is adapted to engage against the strap 110, 210 as the latch 150, 250 pushes against tne surface 128, 228 of the frame 120, 220, said surfaces 128, 228, 152, 252 of the latch 150, 250 and the frame 120, 220 being roughened.

The foregoing only deals with exemplary embodiments of the invention.

## Claims

1. A device (100, 200) for fastening a load strap (110, 210) comprising
a buckle frame (120, 220),
a side slot (130, 230) present in an arm (126b, 226b) of the buckle frame, a slot latch (140, 240), and
a spring-loaded locking latch (150, 250),
wherein the buckle frame is adapted to receive the strap by way of the side slot,
wherein the slot latch is adapted to close the side slot, and
wherein the locking latch is adapted to secure the strap jointly with the slot latch as the locking latch is pushed by a spring (262) of the locking latch against a fastening surface (128, 228) of the buckle frame in such a way that the strap is retained between the locking latch and the fastening surface,
**characterized in that** with the slot latch in a closed position, the strap (110, 210) can be tensioned or relaxed as desired by means of the spring-loaded locking latch with a possibility of lowering the spring-loaded locking latch against the strap (110, 210) to a tension receiving position or raising the same to a top position.

2. The device according to claim 1, wherein the buckle frame is further provided with a transverse latch spindle (260), relative to which the locking latch is adapted to operate, and the locking latch comprises a fastening surface (152, 252), which is adapted to engage against the strap as the locking latch pushes against the fastening surface of the buckle frame, said fastening surfaces of the locking latch and the buckle frame being roughened.

3. The device according to any of the preceding claims, wherein the buckle frame is provided with a transverse attachment spindle (127a, 227a), to which it is possible to attach one end (112, 212) of the strap or a separate load strap segment provided with an engagement hook.

4. The device according to any of the preceding claims, wherein the device (100) has its slot latch (140) adapted, in the process of being opened and closed, to operate relative to an axle (142) extending in a direction perpendicular to an upper part of the buckle frame.

5. The device according to any of the preceding claims, wherein the device (100) has its locking latch (150) provided with a detent rod (154), which is adapted to prevent the slot latch (140) from opening so as to enable the strap (110) to be inserted by way of the side slot (130) into or to be removed from the device when the locking latch is in a closed position.

6. The device according to any of claims 1-3, wherein the device (200) has its slot latch (240) adapted to operate relative to the latch spindle (260) jointly with the locking latch (250) so as to enable the strap (210) to be inserted by way of the side slot (230) into or to be removed from the device when the locking latch is in an open position, and the slot latch prevents the strap from being inserted by way of the side slot into or being removed from the device when the locking latch is in a closed position.

7. A fastening system comprising at least one load strap (110, 210) and the device (100, 200) according to any of the preceding claims for fastening the at least one load strap.

## Patentansprüche

1. Gerät (100, 200) zum Befestigen eines Lastgurts (110, 210), umfassend
einen Schnallenrahmen (120, 220),
einen Seitenschlitz (130, 230), der in einem Arm (126b, 226b) des Schnallenrahmens vorhanden ist,
eine Schlitzklinke (140, 240), und
eine federbelastete Sperrklinke (150, 250),
wobei der Schnallenrahmen zum Aufnehmen des Gurts mittels des Seitenschlitzes geeignet ist,
wobei die Schlitzsperre zum Schließen des Seitenschlitzes geeignet ist, und
wobei die Sperrklinke zum Sichern des Gurts zusammen mit der Schlitzklinke geeignet ist, wenn die Sperrklinke durch eine Feder (262) der Sperrklinke an eine Befestigungsoberfläche (128, 228) des Schnallenrahmens gedrückt wird, sodass der Gurt zwischen der Sperrklinke und der Befestigungsoberfläche gehalten wird,
**dadurch gekennzeichnet, dass**,
wenn die Schlitzklinke in einer geschlossenen Position ist, der Gurt (110, 210) nach Wunsch mittels der federbelasteten Sperrklinke mit einer Möglichkeit des Absenkens der federbelasteten Sperrklinke an den Gurt (110, 210) zu einer Spannungsaufnahmeposition oder Anheben derselben zu einer oberen Position gespannt oder entspannt werden kann.

2. Gerät nach Anspruch 1, wobei der Schnallenrahmen ferner mit einer quer verlaufenden Klinkenspindel (260) versehen ist, relativ zu welcher die Sperrklinke zum Betrieb geeignet ist, und wobei die Sperrklinke eine Befestigungsfläche (152, 252) umfasst, die zum Eingreifen am Gurt geeignet ist, wenn die Sperrklinke an die Befestigungsfläche des Schnallenrahmens drückt, wobei die Befestigungsflächen der Sperrklinke und des Schnallengestells angeraut sind.

3. Gerät nach einem der vorhergehenden Ansprüche, wobei der Schnallenrahmen mit einer quer verlaufenden Anbringungsspindel (127a, 227a) versehen ist, an der das Anbringen von einem Ende (112, 212) des Gurts oder von einem separaten Lastgurtsegment, das mit einem Eingriffshaken versehen ist, möglich ist.

4. Gerät nach einem der vorhergehenden Ansprüche, wobei das Gerät (100) seine Schlitzklinke (140), im Prozess ihrer Öffnung und Schließung, zum Arbeiten relativ zu einer Achse (142), die in einer senkrecht zu einem oberen Teil des Schnallengestells verläuft, geeignet aufweist.

5. Gerät nach einem der vorhergehenden Ansprüche, wobei das Gerät (100) seine Sperrklinke (150) mit einer Verriegelungsstange (154) versehen aufweist, die zum Verhindern geeignet ist, dass sich die Schlitzklinke (140) öffnet, um zu ermöglichen, dass der Gurt (110) mittels des Seitenschlitzes (130) in das Gerät eingeführt oder daraus entfernt wird, wenn sich die Sperrklinke in einer geschlossenen Position befindet.

6. Gerät nach einem der Ansprüche 1 bis 3, wobei das Gerät (200) seine Schlitzklinke (240) zum Arbeiten relativ zur Klinkenspindel (260) gemeinsam mit der Sperrspindel (250) geeignet aufweist, um zu ermöglichen, dass Gurt (210) mittels des Seitenschlitzes (230) in das Gerät eingeführt oder daraus entfernt wird, wenn sich die Sperrklinke in einer offenen Position befindet, und wobei die Schlitzklinke verhindert, dass der Gurt mittels des Seitenschlitzes in das Gerät eingeführt oder daraus entfernt wird, wenn sich die Sperrklinke in einer geschlossenen Position befindet.

7. Befestigungssystem, umfassend zumindest einen Lastgurt (110, 210) und das Gerät (100, 200) nach einem der vorhergehenden Ansprüche zum Befestigen des zumindest einen Lastgurts.

## Revendications

1. Dispositif (100, 200) pour serrer une courroie de charge (110, 210) comprenant :
un cadre de boucle (120, 220),
une fente latérale (130, 230) présente dans un bras (126b, 226b) du cadre de boucle,
un verrou de fente (140, 240), et
un verrou de blocage contraint par ressort (150, 250),
dans lequel le cadre de boucle est adapté pour recevoir la courroie par le biais de la fente latérale,
dans lequel le verrou de fente est adapté pour fermer la fente latérale, et
dans lequel le verrou de blocage est adapté pour bloquer la courroie conjointement avec le verrou de fente à mesure que le verrou de blocage est poussé par un ressort (262) du verrou de blocage contre une surface de serrage (128, 228) du cadre de boucle de façon à ce que la courroie soit retenue entre le verrou de blocage et la surface de serrage,
**caractérisé en ce qu'**avec le verrou de fente dans une position fermée, la courroie (110, 210) peut être tendue ou relâchée comme souhaité au moyen du verrou de blocage contraint par ressort avec une possibilité d'abaisser le verrou de blocage contraint par ressort contre la courroie (110, 210) à une position de réception de tension ou de soulever celui-ci à une positon haute.

2. Dispositif selon la revendication 1, dans lequel le cadre de boucle est en outre doté d'une tige de verrou transversale (260) par rapport à laquelle le verrou de blocage est adapté pour fonctionner, et le verrou de blocage comprend une surface de serrage (152, 252) qui est adaptée pour s'engager contre la courroie à mesure que le verrou de blocage pousse contre la surface de serrage du cadre de boucle, lesdites surfaces de serrage du verrou de blocage et du cadre de boucle étant rugueuses.

3. Dispositif selon l'une quelconque des revendications précédentes, dans lequel le cadre de boucle est doté d'une tige de fixation transversale (127a, 227a) à laquelle il est possible de fixer une extrémité (112, 212) de la courroie ou un segment de courroie de charge séparé doté d'un crochet d'engagement.

4. Dispositif selon l'une quelconque des revendications précédentes, dans lequel le dispositif (100) a son verrou de fente (140) adapté, lorsqu'il est en train d'être ouvert et fermé, pour fonctionner par rapport à un axe (142) s'étendant dans une direction perpendiculaire à une partie supérieure du cadre de boucle.

5. Dispositif selon l'une quelconque des revendications précédentes, dans lequel le dispositif (100) a son verrou de blocage (150) doté d'une tige à cliquet d'arrêt (154) qui est adaptée pour empêcher le verrou à fente (140) de s'ouvrir de façon à permettre à la courroie (110) d'être insérée par le biais de la fente latérale (130) jusque dans le, ou d'être retirée du, dispositif lorsque le verrou de blocage est dans une position fermée.

6. Dispositif selon l'une quelconque des revendications 1-3, dans lequel le dispositif (200) a son verrou de fente (240) adapté pour fonctionner par rapport à la tige de verrou (260) conjointement avec le verrou de blocage (250) de façon à permettre à la courroie (210) d'être insérée par le biais de la fente latérale (230) jusque dans le, ou d'être retirée du, dispositif lorsque le verrou de blocage est dans une position ouverte, et le verrou de fente empêche la courroie d'être insérée par le biais de la fente latérale jusque dans le, ou d'être retirée du, dispositif lorsque le verrou de blocage est dans une position fermée.

7. Système de serrage comprenant au moins une courroie de charge (110, 210) et le dispositif (100, 200) selon l'une quelconque des revendications précédentes pour serrer l'au moins une courroie de charge.
